# EUROPÄISCHE PATENTANMELDUNG

(11) **EP 4 089 488 A2**
(43) Veröffentlichungstag der Anmeldung: **16.11.2022**
(21) Anmeldenummer: 22164072.5
(22) Anmeldetag: 24.03.2022
(51) Int. Cl.: G04F 5/14

(54) **DAMPFZELLENEINRICHTUNG FÜR EINE SENSORVORRICHTUNG UND VERFAHREN ZUM HERSTELLEN EINER DAMPFZELLENEINRICHTUNG FÜR EINE SENSORVORRICHTUNG**

(30) Priorität: 14.04.2021 DE 102021203674
(71) Anmelder: Robert Bosch GmbH, 70442 Stuttgart (DE)
(72) Erfinder: Frey, Peter, 75242 Schellbronn (DE); Schmid, Marc, 71287 Weissach (DE); Fuchs, Tino, 72076 Tuebingen (DE); Riedrich-Moeller, Janine, 71229 Leonberg-Warmbronn (DE)

(57) **Zusammenfassung**

Die vorliegende Erfindung schafft eine Dampfzelleneinrichtung (10) für eine Sensorvorrichtung (SV), umfassend einen Grundwafer (GF), welcher zumindest eine Ausnehmung (A) umfasst, in welcher eine Probesubstanz (PS) eingefasst ist; einen oberen Kappenwafer (OKW); und einen Boden (BD), welcher die Ausnehmung (A) von einer Unterseite (US) vollständig abdeckt, wobei der Grundwafer (GF) die Ausnehmung (A) lateral vollständig umläuft und in einer ersten lateralen Raumrichtung (R1) und in einer zweiten lateralen Raumrichtung (R2), welche zu der ersten lateralen Raumrichtung (R1) senkrecht verläuft, für eine erste Strahlung (ST1) und für eine zweite Strahlung (ST2) durchlässig ist, und der Boden (BD) und der obere Kappenwafer (OKW) in einer vertikalen Raumrichtung (R3), welche senkrecht zur ersten lateralen Raumrichtung (R1) und senkrecht zur zweiten lateralen Raumrichtung (R2) verläuft, für die erste Strahlung (ST1) und für die zweite Strahlung (ST2) durchlässig ist und für eine dritte Strahlung (ST3) durchlässig sein kann. _{[SM(1]}

## Beschreibung

Die vorliegende Erfindung betrifft eine Dampfzelleneinrichtung für eine Sensorvorrichtung und ein Verfahren zum Herstellen einer Dampfzelleneinrichtung für eine Sensorvorrichtung.

### Stand der Technik

Quantensensoren können unter anderem in Atomuhren, Magnetometern, Gyroskopen, Quantenspeichern, Lichtquellen, oder weiteren Sensoreinheiten vorhanden sein, zur Präzisionsmessungen oder zur Bildgebung genutzt werden. Diese Quantensensoren können dabei auf einer Kontrolle eines präparierten atomaren Gases in einem abgeschlossenen Probenvolumen beruhen. Ein derartiges abgeschlossenes Probenvolumen kann in Dampfzellen eingefasst und realisiert sein, wobei in solchen Probevolumen beispielsweise Alkaliatome wie Kalium, Cäsium oder Rubidium gasförmig vorhanden sein können und unter einem definierten Druck stehen können.

Historisch wurde das Gas mit den Alkaliatomen in Dampfzellen, die aus Glas geblasen wurden, eingeschlossen und kontrolliert. Aktuell kann die Miniaturisierung der Dampfzellen nun mit Hilfe von MEMS-Technologien realisiert werden.

Ein Quantensensorsystem kann neben einer Dampfzelle auch einen optischen Aufbau zum Auslesen von Atomen aufweisen, wobei solche Quantensensoren auch mit Magnetfeldspulen, Heizsystemen oder Mikrowellenquellen ausgestatten sein können. Eine derartige Anwendung kann durch ein NMR-Gyroskop realisiert sein. Bei Magnetometern oder NMR-Gyroskopen ist die Anzahl der adressierten Achsen zum Auslesen der Alkaliatome relevant. Typische Waferstapel von MEMS-Dampfzellen erlauben das optische Auslesen der Alkaliatome mit einem Laser in einer Raumrichtung. Diese MEMS-Dampfzellen können durch eine vergleichsweise einfache Bearbeitungstechnologie von Silizium hergestellt werden. Hierbei kann ein hermetisches Verschließen der Kavität mit transparenten Kappen erfolgen, wozu sich Borosilikatglaswafer mit einem an Silizium angepassten thermischen Ausdehnungskoeffizienten eignen können. Allerdings lässt sich meist bei solchen Aufbauten der Dampfzelle die Drehrate um lediglich eine Achse auslesen.

Zur Messung von Drehraten um alle drei Raumrichtungen wird üblicherweise vorgeschlagen, drei der beschriebenen einachsigen Gyroskope in einem Sensorsystem zu verbauen.

In der US 7,292,031 B2 wird ein Dampfzellen-Waferstapel, bestehend aus Silizium, Pyrex-Glas und Silizium, genannt.

### Offenbarung der Erfindung

Die vorliegende Erfindung schafft eine Dampfzelleneinrichtung für eine Sensorvorrichtung nach Anspruch 1 und ein Verfahren zum Herstellen einer Dampfzelleneinrichtung für eine Sensorvorrichtung nach Anspruch 10.

Bevorzugte Weiterbildungen sind Gegenstand der Unteransprüche.

### Vorteile der Erfindung

Die der vorliegenden Erfindung zugrundeliegende Idee besteht darin, eine Dampfzelleneinrichtung für eine Sensorvorrichtung und ein Verfahren zum Herstellen einer Dampfzelleneinrichtung für eine Sensorvorrichtung anzugeben, wobei die Dampfzelleneinrichtung in mehr als nur einer Raumrichtung mit Licht einer oder mehrerer Wellenlängen zu Analysezwecken und/oder zur Veränderung der Probesubstanz in der Ausnehmung der Dampfzelleneinrichtung bestrahlt oder durchstrahlt werden kann.

Beim Realisieren kann so eine erfindungsgemäße Dampfzelleneinrichtung mit der Ausnehmung als optischer Zugang in allen drei Raumrichtungen realisiert werden. Somit lässt sich ein Magnetometer oder ein Gyroskop realisieren, das die Messung der Drehraten um alle drei Drehachsen zugänglich macht. Es kann ein dickerer (Glas-) Kappenwafer verwendet werden, als allgemein üblich.

Erfindungsgemäß umfasst die Dampfzelleneinrichtung für eine Sensorvorrichtung, einen Grundwafer, welcher zumindest eine Ausnehmung umfasst, in welcher eine Probesubstanz eingefasst ist; einen oberen Kappenwafer, welcher auf einer Oberseite des Grundwafers angeordnet ist und zumindest die Ausnehmung vollständig abdeckt; und einen Boden, welcher die Ausnehmung von einer Unterseite vollständig abdeckt, wobei der Grundwafer die Ausnehmung lateral vollständig umläuft und in einer ersten lateralen Raumrichtung und in einer zweiten lateralen Raumrichtung, welche zu der ersten lateralen Raumrichtung senkrecht verläuft, für eine erste Strahlung und für eine zweite Strahlung durchlässig ist, und der Boden und der obere Kappenwafer in einer vertikalen Raumrichtung, welche senkrecht zur ersten lateralen Raumrichtung und senkrecht zur zweiten lateralen Raumrichtung verläuft, für die erste Strahlung und für die zweite Strahlung durchlässig ist.

Der Wortlaut "Wafer" kann hierbei alle anwendbaren Arten von Trägern, Platten, Balken oder Scheiben zur Ausformung der Dampfzelleneinrichtung umfassen, die zumindest für die oben genannte Strahlung durchlässig sein können. Die Ausnehmung kann sich vertikal vollständig durch den Grundwafer hindurch erstrecken. Die lateralen Richtungen können dabei einer Ebene der länglichen Haupterstreckungsrichtung des Grundwafers und des Bodens und der oberen Kappenwafers entsprechen.

Zur Realisierung eines dreiachsigen Drehratensensors können üblicherweise drei Stück der einachsigen Drehratensensoren in einem Sensorsystem verbaut sein. Das erfordert drei Dampfzellen und drei Ausleseoptiken (u.a. Laser, Detektor, optisches System). Daraus kann ein hoher Bauraum resultieren.

Da erfindungsgemäß eine, etwa genau eine, Dampfzelleneinrichtung in alle drei Raumrichtungen genutzt werden kann, kann somit auf mehrere Dampfzelleneinrichtungen verzichtet werden, Bauraum und Kosten gespart werden.

Bei einem zu dünnen Wafer kann dieser gasdurchlässig (verringerte Langzeitstabilität) sein, erschwert die Handhabung bei der Herstellung (verringerte Ausbeute) und bei sehr dünnen Wafern kleiner 50 um kann die Außendruckänderung zu einer unerwünschten Innendruckänderung führen. Ein zu dicker Wafer kann eine hohe UV-Absorption aufweisen, die eine photolytische Alkaliazid-Zersetzung im Prozess stark verlängern kann. Die Dicke der Wafer in der erfindungsgemäßen Dampfzelleneinrichtung kann hinsichtlich dieser Effekte optimiert werden. Die erfindungsgemäße Dampfzelleneinrichtung kann derart ausgelegt sein, dass diesen Effekten entgegengewirkt werden kann.

Die Dampfzelleneinrichtung kann Teil eines Sensorsystems sein, etwa eines dreiachsigen Magnetometers oder Gyroskops.

Zur Bestimmung der Drehraten um die Achsen aller drei Raumrichtungen können drei Laser verwendet werden und das Sensorsystem kann diese drei Laser umfassen. Diese Laser können derart angeordnet sein, dass diese die Dampfzelleneinrichtung aus den drei Raumrichtungen bestrahlen können, wobei die Laserstrahlen dabei senkrecht aufeinander stehen können.

Gemäß einer bevorzugten Ausführungsform der Dampfzelleneinrichtung ist diese als mikroelektromechanisches Bauteil ausgeprägt.

Durch eine besonders kleinskalige Bauweise kann die Dampfzelleneinrichtung als MEMS-Bauteil ausgeformt sein, und beispielsweise in tragbaren Geräten zum Einsatz kommen, etwa in Mobiltelefonen oder zur Unterstützung der Navigation bzw. der Bewegungsstabilität in Fahrzeugen oder Flugobjekten wie Drohnen verwendet werden.

Gemäß einer bevorzugten Ausführungsform der Dampfzelleneinrichtung ist der Boden und/oder der obere Kappenwafer in der vertikalen Raumrichtung für eine dritte Strahlung durchlässig.

Gemäß einer bevorzugten Ausführungsform der Dampfzelleneinrichtung ist der Grundwafer in der ersten lateralen Raumrichtung und in der zweiten lateralen Raumrichtung für eine dritte Strahlung durchlässig.

Gemäß einer bevorzugten Ausführungsform der Dampfzelleneinrichtung liegt die erste Strahlung im sichtbaren Wellenlängenbereich und die zweite Strahlung im infraroten Wellenlängenbereich oder nah-infraroten Wellenlängenbereich und die dritte Strahlung im ultravioletten Wellenlängenbereich.

Die dritte Strahlung kann vorteilhaft zur Bearbeitung, etwa zur Aktivierung oder zum Zersetzen einer Anfangssubstanz zu der zu analysierenden Probesubstanz genutzt werden, und dabei der obere Kappenwafer und/oder der Boden nur aus einer Raumrichtung durchlässig für diese Strahlung sein.

Die Dampfzelleneinrichtung kann in allen Raumrichtungen VIS-transparent sein (für sichtbare Strahlung) und/oder kann in mindestens einer der Raumrichtungen auch UV-transparent sein.

Eine Probesubstanz zur weiteren Analyse kann in der Ausnehmung erzeugt werden, indem ein Anfangsmaterial, etwa ein Alkalimetall, mittels energetischer Strahlung, etwa UV-Strahlung, zersetzt und/oder verdampft werden kann. Bei einer Anwendung von Quantensensoren mit Dampfzellen können so die Alkalimetallatome von außen präpariert und per Laser ausgelesen werden. Es kann dabei eine Erzeugung des Alkalimetallgases auf der Zersetzung von Aziden basieren, wie beispielsweise CsN3 oder RbN3. Bei der Herstellung von MEMS-Dampfzellen kann eine photolytische Zersetzung mit UV-Licht erfolgen. Es kann eine Zersetzung mit einer Quecksilberdampflampe, etwa bei 254 nm oder mit einem KrF-Excimer Laser erfolgen, wobei eine Prozessdauer von größer 50 Stunden bis hin zu 100 Stunden für die Quecksilberdampflampe und einige Minuten für leistungsstarke KrF-Excimer Laser reichen kann. Die Prozessdauer für das Zersetzen des Alkaliazids kann sich gegenüber bekannten Dampfzellen signifikant verringern, da der obere Kappenwafer für UV transparent sein kann und deshalb dicker sein kann, als übliche Kappenwafer.

Gemäß einer bevorzugten Ausführungsform der Dampfzelleneinrichtung sind der Grundwafer und der Boden einstückig ausgeformt.

Durch eine derartige einstückige Ausformung kann ein besonders einfach herstellbares und robustes Bauteil hergestellt werden. Hierbei kann auf ein Bonden des Bodens an dem Grundwafer verzichtet werden, wodurch auf Schäden an einer Bondverbindung zwischen dem Boden und dem Grundwafer durch unterschiedliche thermische Ausdehnungseigenschaften des Grundwafers und des Bodens verzichtet werden kann.

Gemäß einer bevorzugten Ausführungsform der Dampfzelleneinrichtung umfasst die Ausnehmung eine erste Ausnehmung und eine zweite Ausnehmung, die lateral voneinander beanstandet sind und jeweils lateral vom Grundwafer umgeben sind.

Es kann sich in einer Ausnehmung eine erste Probesubstanz befinden und in der zweiten Ausnehmung eine andere Substanz oder die gleiche Probesubstanz oder ein Vakuum.

Die beiden Ausnehmungen können durch einen Kanal verbunden sein oder getrennt voneinander sein.

Gemäß einer bevorzugten Ausführungsform der Dampfzelleneinrichtung umfasst die Ausnehmung ein atomares Gas für eine Magnetfeldmessung oder eine gyroskopische Messung mit Laserlicht.

Gemäß einer bevorzugten Ausführungsform der Dampfzelleneinrichtung sind der Grundwafer und der obere Kappenwafer aneinander gebondet.

Bei der Herstellung der Dampfzelleneinrichtung kann beim Zusammensetzen der Wafer ein Bondverfahren genutzt werden, etwa zum hermetischen Verschließen der Ausnehmung gegenüber einem Außenbereich. Es kann ein anodisches Bondverfahren eingesetzt werden. Das anodische Bondverfahren beruht auf lonenverschiebungen im Glaswafer, so dass speziell modifizierte Glaswafer sog. Borosilikatglaswafer eingesetzt werden können. Der Glaswafer kann in direkte Verbindung mit dem Siliziumwafer gebracht werden und es sind keine weiteren Bondmaterialien notwendig. Während die hohe mechanische Festigkeit und der vergleichsweise geringe technologische Aufwand zu den Vorteilen des Verfahrens zählt. Bei der üblichen Dampfzellenherstellung wird jeweils ein Borosilikatglaswafer auf die Vorderseite und Rückseite eines Siliziumwafers gebondet, wobei solche anwendbaren Borosilikatglaswafer thermische Ausdehnungskoeffizient aufweisen, die an jenen von Silizium angepasst wurden. Somit kann ein hoher mechanischer Stress und im Extremfall ein Waferbruch im Glas-Silizium(Glas)-Schichtstapel vermieden oder verringert werden.

Bei der erfindungsgemäßen Dampfzelleneinrichtung können alle Raumrichtungen zur Kontrolle und zum Auslesen der Atome der Probesubstanz, etwa der Alkaliatome, genutzt werden, was eine Realisierung eines 3-achsigen Magnetometers oder Gyroskops ermöglichen kann. So kann diese Dampfzelleneinrichtung transparente Dampfzellenmaterialien besitzen, welche inhärent eine gewünschte geringere Wärmeleitfähigkeit aufweisen können als üblich angewandte Materialien. Daraus können sich Freiheiten für eine Anordnung der Dampfzelleneinrichtung in einem Sensorsystem und beim Design ergeben. Wenn zumindest eine Seite der Dampfzelleneinrichtung UV-transparent ist, lässt sich ein RbN3 als Probesubstanz während des Fertigungsprozesses effizienter zersetzen.

Erfindungsgemäß erfolgt bei dem Verfahren zum Herstellen einer Dampfzelleneinrichtung für eine Sensorvorrichtung ein Bereitstellen eines Bodens und Anordnen eines Grundwafers auf dem Boden, wobei der Grundwafer zumindest eine Ausnehmung umfasst, oder Bereitstellen eines Grundwafers mit einem Boden, wobei der Grundwafer zumindest eine Ausnehmung umfasst, und wobei der Boden die Ausnehmung von einer Unterseite vollständig abdeckt, wobei der Grundwafer die Ausnehmung lateral vollständig umläuft und in einer ersten lateralen Raumrichtung und in einer zweiten lateralen Raumrichtung, welche zu der ersten lateralen Raumrichtung senkrecht verläuft, für eine erste Strahlung und für eine zweite Strahlung durchlässig ist; ein Einbringen einer Probesubstanz in die zumindest eine Ausnehmung; ein Anordnen eines oberen Kappenwafers, welcher auf einer Oberseite des Grundwafers angeordnet wird und zumindest die Ausnehmung vollständig abdeckt, wobei der Boden und der obere Kappenwafer in einer vertikalen Raumrichtung, welche senkrecht zur ersten lateralen Raumrichtung und senkrecht zur zweiten lateralen Raumrichtung verläuft, für die erste Strahlung und für die zweite Strahlung durchlässig ist.

Gemäß einer bevorzugten Ausführungsform des Verfahrens wird durch den Boden oder durch den Kappenwafer eine dritte Strahlung durchgestrahlt und die Probesubstanz zumindest teilweise zersetzt und/oder verdampft.

Gemäß einer bevorzugten Ausführungsform des Verfahrens liegt die erste Strahlung im sichtbaren Wellenlängenbereich und die zweite Strahlung im infraroten Wellenlängenbereich oder nah-infraroten Wellenlängenbereich und die dritte Strahlung im ultravioletten Wellenlängenbereich.

Das Verfahren kann sich vorteilhaft auch durch die bereits genannten Merkmale der Dampfzelleneinrichtung auszeichnen und umgekehrt.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Die vorliegende Erfindung wird nachfolgend anhand der in den schematischen Figuren der Zeichnung angegebenen Ausführungsbeispiele näher erläutert.

Es zeigen:
- Fig. 1: eine schematische Darstellung einer Dampfzelleneinrichtung gemäß einem Ausführungsbeispiel der vorliegenden Erfindung;
- Fig. 2: eine schematische Darstellung einer Dampfzelleneinrichtung gemäß einem weiteren Ausführungsbeispiel der vorliegenden Erfindung;
- Fig. 3: eine Draufsicht auf mehrere Ausführungen einer Ausnehmung in einer Dampfzelleneinrichtung gemäß Ausführungsbeispielen der vorliegenden Erfindung;
- Fig. 4: eine schematische Darstellung einer Dampfzelleneinrichtung gemäß einem weiteren Ausführungsbeispiel der vorliegenden Erfindung;
- Fig. 5: eine schematische Darstellung einer Dampfzelleneinrichtung gemäß einem weiteren Ausführungsbeispiel der vorliegenden Erfindung;
- Fig. 6: eine schematische Darstellung einer Dampfzelleneinrichtung gemäß einem weiteren Ausführungsbeispiel der vorliegenden Erfindung;
- Fig. 7: eine schematische Darstellung einer Dampfzelleneinrichtung gemäß einem weiteren Ausführungsbeispiel der vorliegenden Erfindung; und
- Fig. 8: eine Blockdarstellung von Verfahrensschritten eines Verfahrens zum Herstellen einer Dampfzelleneinrichtung für eine Sensorvorrichtung gemäß einem Ausführungsbeispiel der vorliegenden Erfindung.

In den Figuren bezeichnen gleiche Bezugszeichen gleiche bzw. funktionsgleiche Elemente.

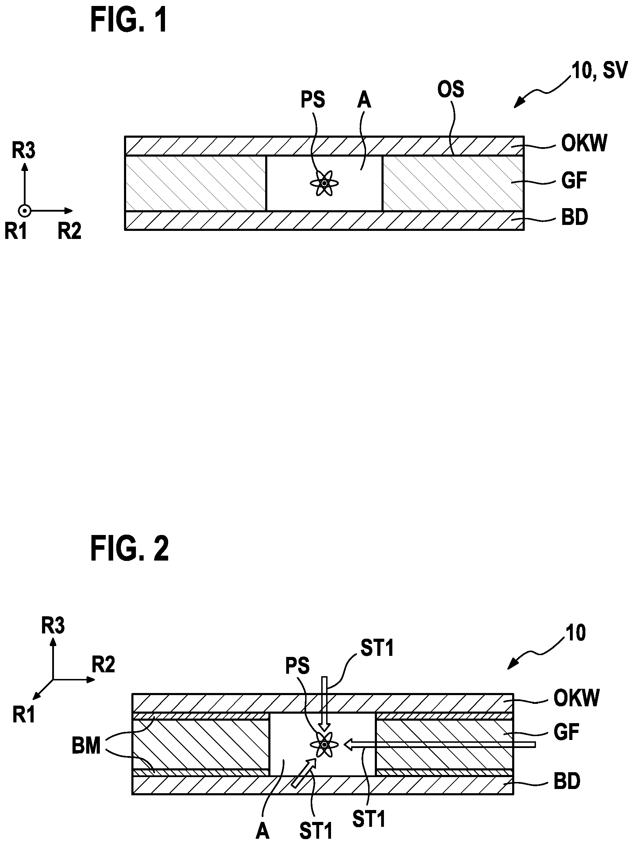

Fig. 1 zeigt eine schematische Darstellung einer Dampfzelleneinrichtung gemäß einem Ausführungsbeispiel der vorliegenden Erfindung.

Die Dampfzelleneinrichtung 10 für eine Sensorvorrichtung SV, umfasst einen Grundwafer GF, welcher zumindest eine Ausnehmung A umfasst, in welcher eine Probesubstanz PS eingefasst ist; einen oberen Kappenwafer OKW, welcher auf einer Oberseite OS des Grundwafers GF angeordnet ist und zumindest die Ausnehmung A vollständig abdeckt; und einen Boden BD, welcher die Ausnehmung A von einer Unterseite US vollständig abdeckt, wobei der Grundwafer GF die Ausnehmung A lateral vollständig umläuft und in einer ersten lateralen Raumrichtung R1 und in einer zweiten lateralen Raumrichtung R2, welche zu der ersten lateralen Raumrichtung R1 senkrecht verläuft, für eine erste Strahlung und für eine zweite Strahlung durchlässig ist, und der Boden BD und der obere Kappenwafer OKW in einer vertikalen Raumrichtung R3, welche senkrecht zur ersten lateralen Raumrichtung R1 und senkrecht zur zweiten lateralen Raumrichtung R2 verläuft, für die erste Strahlung und für die zweite Strahlung durchlässig ist. Der Boden BD und/oder der obere Kappenwafer OKW können in der vertikalen Raumrichtung R3 für eine dritte Strahlung durchlässig sein. Der Grundwafer GF kann in der ersten lateralen Raumrichtung R1 und in der zweiten lateralen Raumrichtung R2 für eine dritte Strahlung durchlässig sein. Die erste Strahlung kann im sichtbaren Wellenlängenbereich liegen und die zweite Strahlung im infraroten Wellenlängenbereich oder nah-infraroten Wellenlängenbereich liegen und die dritte Strahlung im ultravioletten Wellenlängenbereich liegen.

Des Weiteren kann die Ausnehmung ein atomares Gas für eine Magnetfeldmessung oder eine gyroskopische Messung mit Laserlicht umfassen. Der Grundwafer GF und der obere Kappenwafer OKW können aneinander gebondet sein.

In der Fig. 1 ist ein grundlegender Aufbau der Dampfzelleneinrichtung gezeigt.

Die erste Strahlung kann dabei VIS- und NIR sein, als sichtbare und nahinfrarote, oder generell infrarote Strahlung.

Für die grundlegende Funktion als Quantensensor kann die Dampfzelleneinrichtung somit aus allen drei Raumrichtungen R1, R2, und R3 transparent für Licht im sichtbaren (VIS) und nahinfraroten (NIR) Wellenlängenbereich sein.

Fig. 2 zeigt eine schematische Darstellung einer Dampfzelleneinrichtung gemäß einem weiteren Ausführungsbeispiel der vorliegenden Erfindung.

Die Fig. 2 zeigt eine Dampfzelleneinrichtung 10, ähnlich jener der Fig. 1, allerdings mit jeweils einer Bondschicht zwischen dem Boden BD und dem Grundwafer GF sowie zwischen dem Grundwafer GF und dem oberen Kappenwafer OKW, welche aus einem Bondverfahren resultieren können. Der Bereich der Ausnehmung A kann dabei von den Bondschichten ausgespart sein.

Die Dampfzelleneinrichtung 10 kann dabei nach verschiedenen Bondverfahren hergestellt sein. Die transparenten Wafer BD, GF und OKW können - entsprechend dem Bondverfahren - sowohl mit als auch ohne eine Zwischenschicht aus Waferbondmaterial hergestellt werden.

Die im Folgenden zu den Waferbondverfahren mit Waferbondmaterial genannten Beschreibungen gelten auch für Waferbondverfahren ohne Waferbondmaterial.

In der Ausnehmung A kann sich Alkaliatomgas als Probesubstanz PS befinden, welche sich beispielsweise in x-, y- und z-Richtung, also in allen drei Raumrichtungen R1, R2 und R3, mit Lasern auslesen lassen. Hierfür kann das Laserlicht (typischerweise VIS oder NIR - etwa im Wellenlängenbereich von 400 nm bis 1100 nm) aus den drei Raumrichtungen auf die Probesubstanz PS fallen, wechselwirkt mit dieser und tritt wieder aus der Dampfzelleneinrichtung aus.

Dabei kann der Boden BD und der obere Kappenwafer OKW in der vertikalen Raumrichtung R3 für eine erste Strahlung ST1 und eine zweite Strahlung und/oder für eine dritte Strahlung durchlässig sein, der Grundwafer GF in der ersten lateralen Raumrichtung R1 und in der zweiten lateralen Raumrichtung R2 für eine erste Strahlung ST1 und eine zweite Strahlung und/oder für eine dritte Strahlung durchlässig sein, und die erste Strahlung ST1 im sichtbaren Wellenlängenbereich liegen und die zweite Strahlung im infraroten Wellenlängenbereich liegen und die dritte Strahlung im ultravioletten Wellenlängenbereich liegen.

Die Dampfzelleneinrichtung kann nach Fig. 1 und nach Fig. 2 nach verschiedenen Bondverfahren hergestellt werden, etwa nach der Fig. 1 durch Waferbond ohne Bondmaterial BM und nach der Fig. 2 durch Waferbond mit Bondmaterial BM. Die Dampfzelleneinrichtung kann demnach aus transparentem Material gefertigt sein, so dass Laserlicht aus allen drei Raumrichtungen in die Ausnehmung und aus dieser heraus transmittiert werden kann, zumindest in einem Wellenlängenbereich, etwa aus einer Richtung aus auch in UV-Licht.

Ein geeignetes Material für den UV-, VIS- und NIR-transparenten Kappenwafer stellt z.B. Quarz, Silica oder Saphir dar. Quarz und Silica bestehen zu einem sehr hohen Anteil aus Si02. Typische Werte für eine hohe Transmission (Transparenz) können, wie folgt, sein.

Optisch transparent können folgende anwendbare Materialien für Wafer sein (in nm) ab etwa 270 (Fused Quartz), 180 (Fused Silica), 150 (Saphir), 320 (Borosilikatglas), 1100 (Silizium). Der thermische Ausdehnungskoeffizient kann dabei in 1E-6 1/K betragen: 0,55 (Fused Quartz), 0,54 (Fused Silica), 6,66 (Saphir), 3,25 (Borosilikatglas), 2,6 (Silizium), und die Herstellung kann dabei erfolgen, etwa durch Aufschmelzen von natürlich vorkommendem Quarz (Fused Quartz), Oxidation von Roh-Silica durch Flammenhydrolyse (Fused Silica), Kristallzucht (Saphir), Aufschmelzen von Glas (Borosilikatglas), Kristallzucht (Silizium).

Eine wesentliche Rahmenbedingung für das Waferbonden von verschiedenen Materialien kann sich durch Unterschiede im thermischen Ausdehnungskoeffizienten (CTE: coefficient of thermal expansion) ergeben. Temperaturunterschiede (z.B. Bonden bei erhöhter Temperatur und Abkühlen) führen zu mechanischer Spannung an der Bondverbindung. Borosilikatglas eignet sich beispielsweise gut zum Bonden auf Silizium wegen der ähnlichen CTEs. Waferbondverfahren, die zu einem hermetischen Verschluss der Kavität (Voraussetzung für die Langzeitstabilität) führen können, sind beispielsweise ein anodisches Bonden, ein eutektisches Bonden, ein Direktbonden, ein Thermokompressionsbonden, ein Solid-Liquid Interdiffusion Bonding, ein Glasfritt-Bonden.

Es kann nach der Fig. 2 eine Dampfzelle mit einem UV-, VIS- und NIRtransparentem Wafer als oberer Kappenwafer realisiert sein. In den zwei anderen Raumrichtungen kann die Dampfzelle zumindest VIS- und NIR-transparent sein. Der beschriebene Aufbau ermöglicht das Auslesen für den grundlegenden Sensorbetrieb SV und zusätzlich die praktikable Zersetzung des Alkalimetalls mit einer UV-Lichtquelle. Wird ein Bondverfahren mit niedrigen Temperaturunterschieden gewählt, dann können unterschiedliche Materialien eingesetzt werden. Hierbei kann beispielsweise der obere UV-transparente Kappenwafer durch einen Quarzwafer oder Silicawafer und die weiteren beiden Glaswafer durch einen günstigeren nur VIS- und NIR-transparenten Borosilikatglaswafer realisiert werden.

Wenn nur der obere Kappenwafer OKW für UV-Licht transparent ist, stellt dies ein Beispiel für eine Dampfzelle mit einseitigem Zugang für UV-Licht zur Zersetzung des Anfangsmaterials zur Probesubstanz PS (etwa Alkaliazids) während der Dampfzellen-Herstellung und als finales Bauelement dar.

Eine derartige Dampfzelleneinrichtung kann auch aus identischen Wafermaterialien bestehen, betreffend alle Wafer, also den Boden, den Grundwafer und den oberen Kappenwafer.

Die Dampfzelleneinrichtung kann aber auch aus verschiedenen Wafermaterialien aufgebaut sein. Um mechanischen Spannungen durch Temperaturunterschiede und Unterschiede im CTE der Materialien zu verringern, kann die Dampfzelle aus drei identischen Materialien aufgebaut werden. Beispielsweise kann die Dampfzelleneinrichtung aus drei Borosilikatwafern aufgebaut sein. Diese können zwar VIS- und NIR-transparent, absorbieren jedoch UV. Andererseits kann die Dampfzelleneinrichtung auch aus drei Quarz-, Silica- oder Saphirwafern aufgebaut sein. Diese mit einem Bondmaterial BM aneinander gebondet oder auch nicht. Eine Dampfzelleneinrichtung bestehend aus einem dieser Materialien kann sowohl VIS- und NIR- als auch UV-transparent sein.

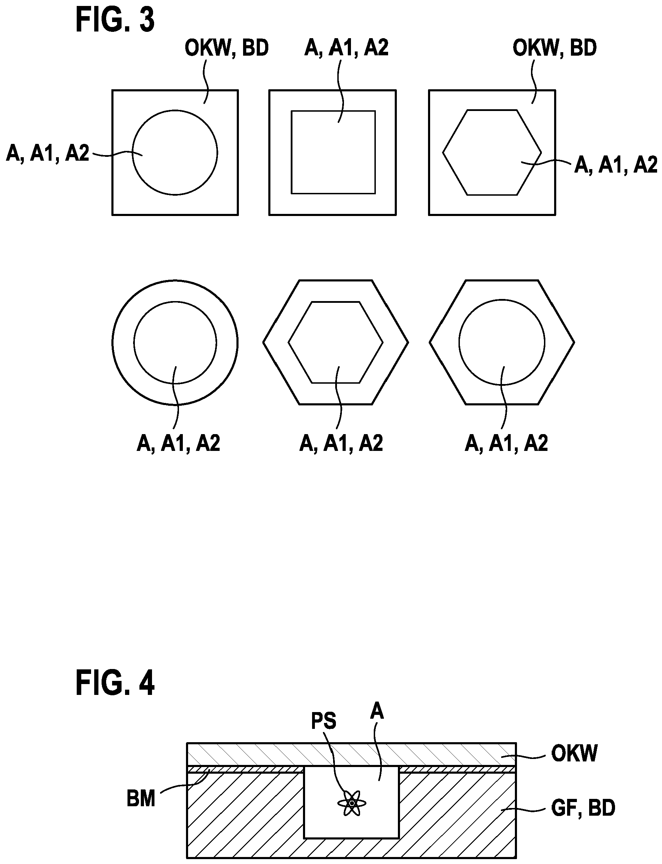

Fig. 3 zeigt eine Draufsicht auf mehrere Ausführungen einer Ausnehmung in einer Dampfzelleneinrichtung gemäß Ausführungsbeispielen der vorliegenden Erfindung.

Die Draufsicht entspricht dabei der Ansicht aus der vertikalen Richtung R3 in der Fig. 2 oder entgegen dieser auf die Ausnehmung A (oder die weiteren Ausnehmungen A1 oder A2 falls vorhanden), etwa auf den oberen Kappenwafer OKW oder auf den Grundwafer, oder von unten auf den Boden BD.

Neben den beispielhaft dargestellten Varianten sind Kombinationen der inneren und äußeren Form möglich. Zudem sind weitere nicht dargestellte Formen wie Polygone möglich

Fig. 4 zeigt eine schematische Darstellung einer Dampfzelleneinrichtung gemäß einem weiteren Ausführungsbeispiel der vorliegenden Erfindung.

Die Dampfzelleneinrichtung der Fig. 4 bestehend aus nur zwei Wafern, im Gegensatz zu den Ausführungen der Fig. 1 und 2, welche drei Wafer aufweisen können. Die Fig. 4 stellt somit eine Vereinfachung dar. Hierbei wird der Grundwafer GF, welcher auch gleichzeitig den Boden BD bilden kann, zunächst mit einer Ausnehmung A, als Kavität, versehen und anschließend an dem oberen Kappenwafer OKW gebondet. Beispielsweise können beide Wafer aus Borosilikatglas, Quarzglas oder Silica bestehen oder aus unterschiedlichen Materialien wie Borosilikatglas oder Silica bestehen.

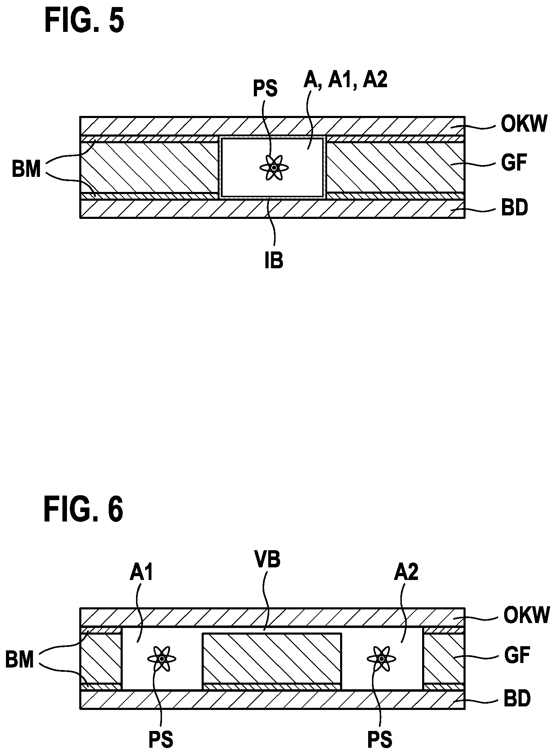

Fig. 5 zeigt eine schematische Darstellung einer Dampfzelleneinrichtung gemäß einem weiteren Ausführungsbeispiel der vorliegenden Erfindung.

Nach der Fig. 5 kann die Ausnehmung A auf der Innenseite, vorteilhaft an den lateralen Seitenwänden des Grundwafers und/oder auf dem Boden BD und/oder auf dem oberen Kappenwafer, etwa auch die Bondschichten an der Seite der Ausnehmung, von einer Innenbeschichtung IB bedeckt sein. Diese Innenbeschichtung IB kann als Diffusionsbarriere ausgeformt sein. Solch eine geeignete Innenbeschichtung IB der Dampfzelleneinrichtung kann als Diffusionsbarriere für die Atome dienen, die sich in der Ausnehmung A befinden. Ein Verlust von Atomen kann die Langzeitstabilität des Quantensensors beeinträchtigen, wobei mit einer solchen Innenbeschichtung IB diesem Effekt zumindest teilweise entgegengewirkt werden kann. Geeignete Materialien für die Innenbeschichtung IB sind beispielsweise Al2O3. Es ergibt sich somit vorteilhaft eine Dampfzelle mit einer Innenbeschichtung IB zur Gewährleistung oder Erhöhung der Langzeitstabilität.

Fig. 6 zeigt eine schematische Darstellung einer Dampfzelleneinrichtung gemäß einem weiteren Ausführungsbeispiel der vorliegenden Erfindung.

Nach der Fig. 6 kann die Ausnehmung A eine erste Ausnehmung A1 und eine zweite Ausnehmung A2 umfassen, die lateral voneinander beanstandet sein können und jeweils lateral vom Grundwafer GF umgeben sein können. Dabei kann ein Verbindungskanal VB, etwa zum Druckausgleich, oder zum Materialausgleich zwischen den beiden Ausnehmungen vorhanden sein, dieser etwa im Grundwafer GF eingefasst oder im Grundwafer und zum oberen Kappenwafer oder zum Boden hin offen. Während die erste Ausnehmung A1 der eigentlichen Messung dienen kann, kann die zweite Ausnehmung A2 ein leicht kälteres Reservoir für das Atomgas darstellen, in der das kondensierte Atomgas vorliegen kann.

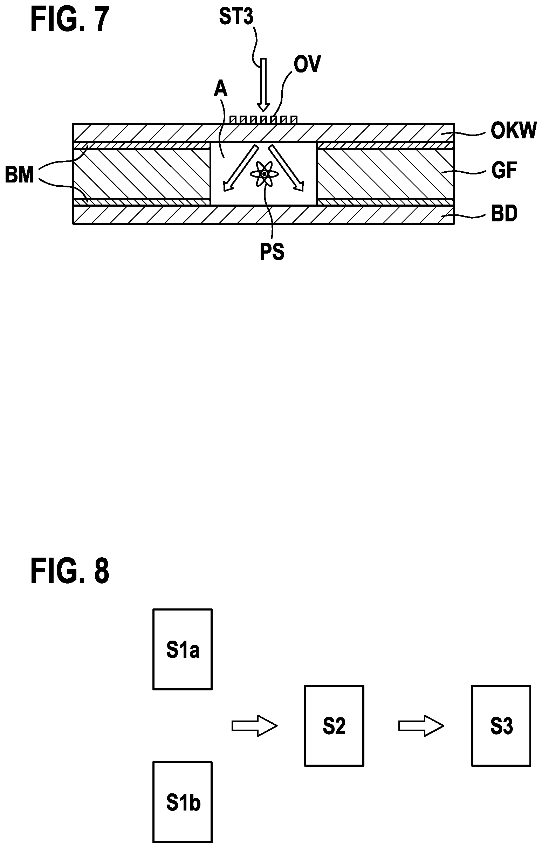

Fig. 7 zeigt eine schematische Darstellung einer Dampfzelleneinrichtung gemäß einem weiteren Ausführungsbeispiel der vorliegenden Erfindung.

Die Fig. 7 zeigt eine Dampfzelleneinrichtung mit einer integrierten optischen Vorrichtung OV. Bei dieser kann die optische Vorrichtung OV aus Richtung der vertikalen Raumrichtung und für die zweite Strahlung ST2 etwa auf dem oberen Kappenwafer OKW integriert sein. Eine solche optische Vorrichtung OV kann auch auf mehr als einem Wafer integriert sein. Beispielsweise kann ein Beugungsgitter, das das Laserlicht in mehrere Strahlen aufteilt als Struktur auf einem oder mehreren Kappenwafern, oder auf dem Boden aufgebracht sein. Hiermit kann der optische Weg in der Dampfzelle vergrößert sein. Zudem können mit nur einem einzigen einfallenden Laser durch die Aufspaltung Sensorwerte in mehreren Raumrichtungen (z.B. die Drehrate um mehrere Achsen) gleichzeitig erfasst werden.

Fig. 8 zeigt eine Blockdarstellung von Verfahrensschritten eines Verfahrens zum Herstellen einer Dampfzelleneinrichtung für eine Sensorvorrichtung gemäß einem Ausführungsbeispiel der vorliegenden Erfindung.

Bei dem Verfahren zum Herstellen einer Dampfzelleneinrichtung für eine Sensorvorrichtung erfolgt ein Bereitstellen Sla eines Bodens und Anordnen eines Grundwafers auf dem Boden, wobei der Grundwafer zumindest eine Ausnehmung umfasst, oder Bereitstellen S1b eines Grundwafers mit einem Boden, wobei der Grundwafer zumindest eine Ausnehmung umfasst, und wobei der Boden die Ausnehmung von einer Unterseite vollständig abdeckt, wobei der Grundwafer die Ausnehmung lateral vollständig umläuft und in einer ersten lateralen Raumrichtung und in einer zweiten lateralen Raumrichtung, welche zu der ersten lateralen Raumrichtung senkrecht verläuft, für eine erste Strahlung und für eine zweite Strahlung durchlässig ist; ein Einbringen S2 einer Probesubstanz in die zumindest eine Ausnehmung; ein Anordnen S3 eines oberen Kappenwafers, welcher auf einer Oberseite des Grundwafers angeordnet wird und zumindest die Ausnehmung vollständig abdeckt, wobei der Boden und der obere Kappenwafer in einer vertikalen Raumrichtung, welche senkrecht zur ersten lateralen Raumrichtung und senkrecht zur zweiten lateralen Raumrichtung verläuft, für die erste Strahlung und für die zweite Strahlung durchlässig ist.

Obwohl die vorliegende Erfindung anhand des bevorzugten Ausführungsbeispiels vorstehend vollständig beschrieben wurde, ist sie darauf nicht beschränkt, sondern auf vielfältige Art und Weise modifizierbar.

## Patentansprüche

1. Dampfzelleneinrichtung (10) für eine Sensorvorrichtung (SV), umfassend:
- einen Grundwafer (GF), welcher zumindest eine Ausnehmung (A) umfasst, in welcher eine Probesubstanz (PS) eingefasst ist;
- einen oberen Kappenwafer (OKW), welcher auf einer Oberseite (OS) des Grundwafers (GF) angeordnet ist und zumindest die Ausnehmung (A) vollständig abdeckt; und
- einen Boden (BD), welcher die Ausnehmung (A) von einer Unterseite (US) vollständig abdeckt, wobei der Grundwafer (GF) die Ausnehmung (A) lateral vollständig umläuft und in einer ersten lateralen Raumrichtung (R1) und in einer zweiten lateralen Raumrichtung (R2), welche zu der ersten lateralen Raumrichtung (R1) senkrecht verläuft, für eine erste Strahlung (ST1) und für eine zweite Strahlung (ST2) durchlässig ist, und der Boden (BD) und der obere Kappenwafer (OKW) in einer vertikalen Raumrichtung (R3), welche senkrecht zur ersten lateralen Raumrichtung (R1) und senkrecht zur zweiten lateralen Raumrichtung (R2) verläuft, für die erste Strahlung (ST1) und für die zweite Strahlung (ST2) durchlässig ist.

2. Dampfzelleneinrichtung (10) nach Anspruch 1, welche als mikroelektromechanisches Bauteil (MEMS) ausgeprägt ist.

3. Dampfzelleneinrichtung (10) nach Anspruch 1 oder 2, bei welcher der Boden (BD) und/oder der obere Kappenwafer (OKW) in der vertikalen Raumrichtung (R3) für eine dritte Strahlung (ST3) durchlässig ist.

4. Dampfzelleneinrichtung (10) nach einem der Ansprüche 1 bis 3, bei welcher der Grundwafer (GF) in der ersten lateralen Raumrichtung (R1) und in der zweiten lateralen Raumrichtung (R2) für eine dritte Strahlung (ST3) durchlässig ist.

5. Dampfzelleneinrichtung (10) nach einem der Ansprüche 1 bis 4, bei welcher die erste Strahlung (ST1) im sichtbaren Wellenlängenbereich liegt und die zweite Strahlung (ST2) im infraroten Wellenlängenbereich oder nah-infraroten Wellenlängenbereich liegt und die dritte Strahlung (ST3) im ultravioletten Wellenlängenbereich liegt.

6. Dampfzelleneinrichtung (10) nach einem der Ansprüche 1 bis 5, bei welcher der Grundwafer (GF) und der Boden (BD) einstückig ausgeformt sind.

7. Dampfzelleneinrichtung (10) nach einem der Ansprüche 1 bis 6, bei welcher die Ausnehmung (A) eine erste Ausnehmung (A1) und eine zweite Ausnehmung (A2) umfasst, die lateral voneinander beanstandet sind und jeweils lateral vom Grundwafer (GF) umgeben sind.

8. Dampfzelleneinrichtung (10) nach einem der Ansprüche 1 bis 7, bei welcher die Ausnehmung ein atomares Gas für eine Magnetfeld-Messung mit Laserlicht umfasst.

9. Dampfzelleneinrichtung (10) nach einem der Ansprüche 1 bis 8, bei welcher der Grundwafer (GF) und der obere Kappenwafer (OKW) aneinander gebondet sind.

10. Verfahren zum Herstellen einer Dampfzelleneinrichtung (10) für eine Sensorvorrichtung (SV), umfassend
- ein Bereitstellen (Sla) eines Bodens (BD) und Anordnen eines Grundwafers (GF) auf dem Boden (BD), wobei der Grundwafer (GF) zumindest eine Ausnehmung (A) umfasst, oder Bereitstellen (S1b) eines Grundwafers (GF) mit einem Boden (BD), wobei der Grundwafer (GF) zumindest eine Ausnehmung (A) umfasst, und wobei der Boden (BD) die Ausnehmung (A) von einer Unterseite (US) vollständig abdeckt, wobei der Grundwafer (GF) die Ausnehmung (A) lateral vollständig umläuft und in einer ersten lateralen Raumrichtung (R1) und in einer zweiten lateralen Raumrichtung (R2), welche zu der ersten lateralen Raumrichtung (R1) senkrecht verläuft, für eine erste Strahlung (ST1) und für eine zweite Strahlung (ST2) durchlässig ist;
- Einbringen (S2) einer Probesubstanz (PS) in die zumindest eine Ausnehmung (A);
- Anordnen (S3) eines oberen Kappenwafers (OKW), welcher auf einer Oberseite (OS) des Grundwafers (GF) angeordnet wird und zumindest die Ausnehmung (A) vollständig abdeckt, wobei der Boden (BD) und der obere Kappenwafer (OKW) in einer vertikalen Raumrichtung (R3), welche senkrecht zur ersten lateralen Raumrichtung (R1) und senkrecht zur zweiten lateralen Raumrichtung (R2) verläuft, für die erste Strahlung (ST1) und für die zweite Strahlung (ST2) durchlässig ist.

11. Verfahren nach Anspruch 10, bei welchem durch den Boden (BD) oder durch den Kappenwafer (OKW) eine dritte Strahlung (ST2) durchgestrahlt wird und die Probesubstanz (PS) zumindest teilweise zersetzt und/oder verdampft wird.

12. Verfahren nach Anspruch 11, bei welchem die erste Strahlung (ST1) im sichtbaren Wellenlängenbereich liegt und die zweite Strahlung (ST2) im infraroten Wellenlängenbereich oder nah-infraroten Wellenlängenbereich liegt und die dritte Strahlung (ST3) im ultravioletten Wellenlängenbereich liegt.
